# EUROPÄISCHE PATENTSCHRIFT

(11) **EP 4 126 488 B1**
(45) Veröffentlichungstag und Bekanntmachung des Hinweises auf die Patenterteilung: **07.08.2024**
(21) Anmeldenummer: 21712521.0
(22) Anmeldetag: 19.03.2021
(51) Int. Cl.: B29B 17/02

(54) **VERWENDUNG VON MISCHUNGEN AUS WASSER UND ÄTHERISCHEN ÖL ZUR AUFTRENNUNG VON MEHRSCHICHTVERBUNDEN FÜR DAS SORTENREINE RECYCLING DER POLYMER- BZW. METALLFOLIEN**
USE OF MIXTURES OF WATER AND ESSENTIAL OIL FOR THE SEPARATION OF MULTILAYER COMPOSITES FOR THE RECYCLING OF POLYMER OR METAL FILMS
UTILISATION DES MÉLANGES D'EAU ET D'HUILE ESSENTIELLE POUR SÉPARER DES COMPOSITES MULTICOUCHES POUR LE RECYCLAGE DES FEUILLES POLYMÈRES OU MÉTALLIQUES

(30) Priorität: 23.03.2020 EP 20164800
(43) Veröffentlichungstag der Anmeldung: 08.02.2023
(73) Patentinhaber: Covestro Deutschland AG, 51373 Leverkusen (DE)
(72) Erfinder: BUECHNER, Joerg, 51467 Bergisch Gladbach (DE); THIEBES, Christoph, 51061 Köln (DE); FAIT, Thomas, 53844 Troisdorf (DE); KIRSTEIN, Oliver, 42349 Wuppertal (DE)
(74) Vertreter: Levpat
(86) Internationale Anmeldenummer: PCT/EP2021/057040
(87) Internationale Veröffentlichungsnummer: WO 2021/191059

(56) Entgegenhaltungen:
- WO-A1-2015/149142
- DE-A1- 4 340 087
- JP-A- 2000 331 384
- JP-A- 2007 284 648
- US-A1- 2007 228 600
- US-A1- 2020 016 794
- US-B2- 10 533 282

## Beschreibung

Mehrschichtverbunde beispielsweise verwendet für das Verpacken von Lebensmitteln bestehen aus wenigstens zwei flächig miteinander verbundenen Folienschichten. Die Folien sind beispielsweise Polymerfolien erzeugt aus Polyethylen-, Polypropylen-, Polyester- und Polyamid. Die Polymerfolien können auch co-extrudierte Polyolefinfolien mit Etylenvinylalkohol-Innenschicht sein.

Mehrschichtverbunde enthalten gegebenenfalls auch als eine Schicht Aluminiumfolie oder mit Aluminium oder Siliziumoxid bedampfte Polypropylen- bzw. Polyesterfolien. Die Mehrschichtverbunde können auch eine Papierschicht enthalten. Mehrschichtverbunde enthalten in der Regel eine Schicht Druckfarbe, die im Frontaldruck oder im Konterdruck (https://roempp.thieme.de/roempp4.0/do/data/RD-06-01930) aufgetragen sein kann.

In der Regel werden für die Lebensmittelverpackung 2-lagige (Duplex-Verbunde) oder 3-lagige (Triplex-Verbunde) eingesetzt. Es sind aber auch Mehrschichtverbunde mit mehr als drei Schichten möglich.

In vielen Fällen werden die verschiedenen Schichten mittels eines Klebstoffpolymers miteinander flächig verbunden. Dazu kommen in der Regel 1-komponentige oder 2-komponentige Polyurethan-Klebstoffpolymere zur Anwendung, die als lösemittelfreier, lösemittelhaltiger oder wässriger Klebstoff auf mindestens eine der jeweils zu verbindenden Schichten aufgetragen werden, bevor die zu verbindenden Schichten miteinander verbunden werden. Das Auftragsgewicht der Klebstoffpolymere zwischen zwei jeweils zu verbindenen Schichten liegt je nach Art des Klebstoffs zwischen 0,5g/m² und 5g/m². Etwaig in dem Klebstoff vorhandenes Lösemittel bzw. Wasser sind hierbei nicht eingerechnet. Auch Haftvermittler, beispielsweise auf Polyurethanbasis, können analog zum Einsatz kommen. Dies ist beispielsweise oft bei co-extrudierten Polymeren der Fall, wie den oben genannten co-extrudierten Polyolefinfolien mit Etylenvinylalkohol-Innenschicht. Der Klebstoff- bzw. Haftvermittler wird nicht als Schicht betrachtet.

Die Vorteile der Mehrschichtverbunde für das Verpacken von Lebensmitteln -im Vergleich zu anderen Verpackungsarten wie zum Beispiel Glas- oder Metallverpackung - sind neben den geringen Kosten und dem geringen Gewicht auch der geringe Platzbedarf der verpackten Lebensmittel.

Mehrschichtverbunde für das Verpacken von Lebensmitteln müssen hohen Anforderungen genügen. So muss zum Beispiel die Barriere der Mehrschichtverbunde ausreichend hoch sein um den Kontakt des Lebensmittels mit Sauerstoff zu vermeiden. Außerdem ist die Barriere nötig, damit Aromen und Vitamine in den Lebensmitteln geschützt werden. Gelegentlich werden in die Verpackung auch Schutzgase (z.B. Stickstoff) eingebracht. Diese Schutzgase müssen während der Haltbarkeitsdauer des Lebensmittels in der Verpackung verbleiben. Die Barrierewirkung der Verpackung ist also notwendig, um eine möglichst lange Mindesthaltbarkeit des Lebensmittels zu gewährleisten. Die Barriereeigenschaft eines Mehrschichtverbundes kann über die Auswahl der Folienschichten bzw. deren Kombination sichergestellt werden.

Neben den Barriereeigenschaften der Mehrschichtverbunde ist auch eine zuverlässige Verbindung der einzelnen Folien miteinander zu gewährleisten. Dies ist insbesondere bei Mehrschichtverbunden wichtig, die nach dem Abpacken des Lebensmittels dem Dampfsterilisationsprozess ausgesetzt werden. Die Dampfsterilisation wird bei Temperaturen bis 134°C über einen Zeitraum von bis zu 60 Minuten durchgeführt. Dabei dürfen sich die Folienschichten nicht voneinander trennen. Um dieser Anforderung zu genügen, muss das eingesetzte Klebstoffpolymer eine hohe Beständigkeit besitzen. Diese Anforderung wird im Wesentlichen nur von vernetzten Klebstoffpolymeren erreicht.

Die Mehrschichtverbunde besitzen jedoch den Nachteil, dass sie nach dem Verbrauch des Lebensmittels nur schwer wieder in die einzelnen Folienschichten getrennt werden können. Das Auftrennen in die Einzelschichten ist jedoch sinnvoll, damit die Polymere bzw. das Aluminium wieder sortenrein in den Wertstoffkreislauf zurückgeführt werden können.

Das Deutsche Verpackungsgesetz schreibt für Kunststoffverpackungen ab 2022 eine Recyclingquote von 63% vor. Dabei ist es sinnvoll, wenn das Recycling zu möglichst hochwertigen und sortenreinen Kunststoffen führt. Um die sortenreine Sortierung der einzelnen Folienschichten zu ermöglichen, müssen die Schichten voneinander getrennt werden. Die Trennung der Schichten ist jedoch nicht trivial, weil die vernetzten Klebstoffpolymere nur eine geringe Löslichkeit besitzen.

Es muss daher ein Weg gefunden werden die Klebstoffschicht bzw. Haftvermittlerschicht zwischen den Folienschichten soweit zu schwächen, dass die Schichten voneinander getrennt werden können.

Inzwischen wurden bereits spezielle Trennverfahren entwickelt, die für einzelne Folienkombinationen oder Kunststoffe eingesetzt werden können.

So offenbart das Patent EP 0 543 302 B1 ein Verfahren für die Trennung von Aluminiumfolie und Polyethylen- oder Polyesterfolie unter Einwirkung von Fettsäuren und in einem geschlossenen Behälter bei 100°C bis 122°C.

Ein Nachteil dieser Erfindung ist der Umstand, dass nur ausgewählte Folienkombinationen getrennt werden können. Der Einsatz für die Trennung aller Mehrschichtverbunde, die für die Lebensmittelverpackung zum Einsatz kommen, ist mit diesem Verfahren nicht möglich.

WO 2015/000681 A1 beschreibt ein lösemittelbasiertes Kunststoff-Recycling-Verfahren, mit dem die Polymere aus Kunststoffabfällen zurückgewonnen werden können. Das Verfahren basiert auf der Mitverwendung von Thermostabilisatoren in einem paraffinischen Kohlenwasserstoffgemisch. Das bei erhöhter Temperatur in dem Kohlenwasserstoffgemisch gelöste Polymer fällt beim Abkühlen aus. Das Polymer wird mechanisch abgetrennt und der im Polymer vorhandene Kohlenwasserstoffgemisch durch Anlegen von Vakuum z.B. in einem Entgasungsextruder entfernt. Der Thermostabilisator verhindert den Polymerabbau des gelösten Polymers. Das gewonnene Polymer enthält 50 - 1000ppm des Kohlenwasserstoffgemischs.

Ein Nachteil dieser Arbeitsweise ist, dass das zurückgewonnene Polymer noch Restmengen des zur Abtrennung verwendeten Kohlenwasserstoffs enthält.

EP 2 668 226 B1 offenbart ein Trennmedium für Mehrschichtsysteme, welches aus einer nanoskaligen Dispersion besteht, die eine organische Komponente, eine wässrige Komponente sowie ein Tensid enthält. Das Verfahren zielt auf das Recycling von Photovoltaikmodulen ab.

US 2017/0080603 A1 beschreibt ein Verfahren zur Auftrennung von Verpackungsmaterialien, wobei die Trennflüssigkeit eine Carbonsäure und ein Quellmittel umfasst, wobei es sich bei Letzterem um ein Kohlenwasserstofflösungsmittel handelt, wie Toluol, Xylol, Ethylbenzol, Cyclohexan oder Decalin, wie Olefine, Terpene, Ketone, Ether oder Ester. Dokument DE 43 40 087 lehrt Kunststoffabfälle unterschiedlicher Zusammensetzung zu trennen. Hierzu werden Kunststoffmaterialien in verschiedenen natürlichen ätherischen Ölen aufgelöst. Als Beispiel für Kunststoffabfälle werden Verpackungen genannt.

Dokument JP 2000 331384 A lehrt CDs, also einen durch Polycarbonate zusammengehaltenen Mehrschichtverbund, unter Verwendung von Teebaumöl aufzutrennen.

Es besteht somit ein Bedarf nach einem Verfahren zur Auftrennung von Mehrschichtverbunden, insbesondere von Mehrschichtverbunden, die für das Verpacken von Lebensmittel eingesetzt werden. Das Verfahren soll die Klebstoffschicht bzw. Haftvermittlerschicht zwischen den Folienschichten der Mehrschichtverbunde soweit schwächen, dass die Trennung der Mehrschichtverbunde in die Einzelschichten möglich ist.

Das Verfahren soll möglichst ohne die Mitverwendung von Gefahrstoffen bzw. leicht entzündlichen Stoffen möglich sein.

Gelöst wurde die Aufgabe durch die Verwendung eines Trennmediums nach Anspruch 1.

Gegenstand der vorliegenden Erfindung ist die Verwendung eines Trennmediums, enthaltend mindestens ein ätherisches Öl oder bestehend aus mindestens einem ätherischen Öl, ausgewählt aus der Gruppe bestehend aus Phenylpropanoiden, zur Trennung von mindestens zwei durch mindestens einen Polyurethan-basierten Haftvermittler und/oder mindestens ein Polyurethan-basiertes Klebstoffpolymer, flächig miteinander verbundenen Schichten eines Mehrschichtverbunds.

Ein weiterer Gegenstand der vorliegenden Erfindung ist ein Verfahren nach Anspruch 2 zum Trennen von mindestens zwei durch mindestens einen Polyurethan-basierten Haftvermittler und/oder mindestens ein Polyurethan-basiertes Klebstoffpolymer, flächig miteinander verbundenen Schichten von Mehrschichtverbunden, dadurch gekennzeichnet, dass der Mehrschichtenverbund mit einem Trennmedium, enthaltend mindestens ein ätherisches Öl oder bestehend aus mindestens einem ätherischen Öl, ausgewählt aus der Gruppe bestehend aus Phenylpropanoiden, behandelt wird.

Ein Klebstoff ist ein nichtmetallischer Stoff, der in der Lage ist, Werkstoffe durch Oberflächenhaftung (Adhäsion) und seine innere Festigkeit (Kohäsion) zu verbinden. Es handelt sich also um einen Prozesswerkstoff, der erst durch eine (physikalische oder chemische) Abbindereaktion während der Fertigung seine mechanische Festigkeit ausbildet und der beim Fügeverfahren Kleben **(EN 923:2015)** zum Verbinden verschiedener Fügeteile verwendet wird. Dabei versteht man unter Fügeteilen zwei oder mehr Werkstücke (mit geometrisch bestimmter Form oder formlose Stoffe), die auf Dauer miteinander verbunden sind, wie beispielsweise die einzelnen Schichten in Mehrschichtverbunden. Ein Fügeverfahren ist entsprechend ein Verfahren, das dazu dient Werkstücke auf Dauer miteinander zu verbinden.

Im Rahmen dieser Erfindung versteht man unter einem Haftvermittler ein Polymer, welches - beispielsweise zur Verbesserung der Haftung - in einem Koextrusionsprozess zwischen zwei Schichten eines Mehrschichtverbundes gebracht wird. Typische Polymerklassen, die als Haftvermittler eingesetzt werden, sind: Poly-Ethylvinylalkohle, modifizierte Polyolefine, Polyester, Polyurethane. Besonders bevorzugt sind Polyester und Polyurethane, besonders bevorzugt sind Polyurethane, ganz besonders bevorzugt sind Polyesterpolyurethane.

Im Rahmen dieser Erfindung werden unter Polyurethan-basierten Haftvermittlern und/oder Polyurethan-basierten Klebstoffpolymeren solche Polymere verstanden, die nach dem Abbinden wenigstens ein Strukturmerkmal in der Polymerkette aufweisen, welches durch Reaktion einer Isocyanatgruppe mit einer Isocyanat-reaktiven Verbindung gebildet wird. Beispiele für Strukturmerkmale, die durch Reaktion von Isocyanatgruppen mit Isocyanat-reaktiven Verbindungen erzeugt werden sind Urethan-, Allophant-, Biuret-, Harnstoffgruppen.

In der weiteren Beschreibung bezieht sich Haftvermittler sowohl auf den Zustand vor als auch auf den Zustand nach dem Abbinden (Vorgang, bei dem ein Klebstoff seine Kohäsionsfestigkeit gewinnt und die Klebung ihre physikalischen und chemischen Eigenschaften entwickelt).

Als Trennmedium kann das ätherische Öl oder die Mischung von ätherischen Ölen selbst, eine einphasige Mischung des ätherischen Öls bzw. der Mischung von ätherischen Ölen mit anderen Substanzen oder eine mehrphasige Zusammensetzung enthaltend das ätherische Öl, beispielsweise eine wässrige Emulsion des ätherischen Öls oder der Mischung von ätherischen Ölen verwendet werden.

Bevorzugt besteht das Trennmedium aus einer wässrigen Emulsion des mindestens einen ätherischen Öls.

In einer weiteren bevorzugten Ausführungsform enthält das Trennmedium eine wässrige Emulsion des mindestens einen ätherischen Öls. Bevorzugt enthält das Trennmedium bei dieser Ausführungsform keine Carbonsäure.

Bevorzugt wird eine wässrige Emulsion in das Verfahren eingesetzt, die > 0,1 Volumen-%, besonders bevorzugt ≥ 0,5 Volumen -%, ganz besonders bevorzugt ≥ 1 Volumen -%, noch mehr bevorzugt ≥ 10 Volumen -% des mindestens einen ätherischen Öls, bezogen auf das eingesetzte Volumen an Wasser, enthält.

Als Beispiele für ätherische Öle aus der Gruppe der Phenole, Phenylpropanoide und Furanocumarine seien genannt Carveol, Carvacrol, Thymol, Apiol, Trans-Zimtsäuremethylester, Cis- und Trans-Anethol, Dillapiol, Estragol, Eugenol und Coriandrin.

Die ätherischen Öle können natürlichen Ursprungs sein, d.h. aus Pflanzen oder Pflanzenteilen gewonnen werden, oder synthetisch hergestellt werden.

Das ätherische Öl kann auch durch Oxidation, Veresterung oder Alkylierung chemisch verändert sein.

Unter den oben genannten Stoffgruppen ist insbesondere die der Phenylpropanoide zur Verwendung im erfindungsgemäßen Verfahren geeignet.

Ganz besonders geeignet ist die Verbindung Eugenol.

Die oben genannten ätherischen Öle aus der Gruppe der Phenole, Phenylpropanoide und Furanocumarine bzw. Mischungen dieser Öle können im erfindungsgemäßen Verfahren auch in Abmischung mit ätherischen Ölen aus den Stoffgruppen der acyclischen und cylischen Mono- und Sesquiterpene verwendet werden. Als Beispiele für acyclische und cylische Mono- und Sesquiterpene seien genannt Ocimen, Myrcen, Limonen, α-Terpinen, Phellandren, α-Pinen, Camphen, Linalool, Geraniol, Menthol, Sabinol, Borneol, Neral, Citronellal, Carvon, Menthon, Campher, Fenchon, Menthofuran, Cineol, Anethofuran, Geranylacetat, Linalylacetat, Essigsäurebornylester, Isobornylacetat, Farnesol, Farnesen, α-Bisabolol, α-Caryophyllen, Chamazulen und β-Caryophyllen. Bevorzugt ist jedoch die Verwendung von ätherischen Ölen und Mischungen ätherischer Öle ausschließlich ausgewählt aus der Gruppe der Phenylpropanoide.

In einer bevorzugten Ausführungsform enthält die wässrige Emulsion ≥ 0,5 Volumen -%, bevorzugt ≥ 0,9 Volumen-% einer Mischung an ätherischen Ölen, bezogen auf das eingesetzte Volumen an Wasser, wobei der Volumenanteil an Eugenol in der Mischung der ätherischen Öle wenigstens (≥) 1/3 beträgt.

Durch Zusatz von oberflächenaktiven Substanzen z.B. Tensiden, Emulgatoren zu der Mischung aus Wasser und ätherischem/en Öl/en kann die Effektivität des Verfahrens gesteigert werden.

Ein Mehrschichtverbund im Sinne der Erfindung besteht aus mindestens zwei flächig miteinander verbundenen Schichten, die aus dem gleichen Material oder unterschiedlichen Materialien bestehen können.

Bei den Schichten handelt sich um Polymerschichten, bevorzugt erzeugt aus Polyethylen-, Polypropylen-, Polyester- oder Polyamid. Es kann sich um co-extrudierte Polymerschichten handeln, beispielsweise um Polyolefinfolien mit Etylenvinylalkohol-Innenschicht. Die Oberflächen der Polymerschichten können behandelt sein, d.h. beispielsweise mit Aluminium oder SiOx bedampft oder mit Druckfarbe bedruckt sind. In diesem Falle ist die Polymerschicht inklusive der durch die Oberflächenbehandlung erzeugten Schicht als eine einzige Schicht des Mehrschichtverbundes anzusehen.

Demgegenüber wird eine durch einen Haftvermittler oder ein Klebstoffpolymer mit einer Schicht des Verbundes flächig verbundene Aluminiumfolie als eigenständige Schicht betrachtet. Dies gilt auch für eine Aluminiumschicht, die zunächst auf einen Träger aufgedampft und dann mittels einer Transferbeschichtung flächig unter Verwendung eines Haftvermittlers oder eines Klebstoffpolymers mit einer Schicht des Verbundes verbunden wird. Auch kann eine Schicht des Verbundes eine Papieroder Pappschicht sein, oder eine Pflanzenfasern enthaltende Schicht sein.

Polyurethan-basierte Haftvermittler bzw. Klebstoffpolymere, mit welchen die Schichten flächig verbunden sind, sind im Stand der Technik ausführlich beschrieben, so beispielsweise in Manufacturing Flexible Packaging, Thomas Dunn, ISBN 978-0-323-264-36-5, Ulrich Meier Westhues; Polyurethane, Lacke, Kleb- und Dichtstoffe, ISBN 978-3-86630-896-1. Diese Auflistung ist nicht einschränkend zu werten. Selbstverständlich können auch Mehrschichtverbunde mit dem erfindungsgemäßen Verfahren getrennt werden, deren Schichten mit Polyurethan-basierten Haftvermittlern bzw. Klebstoffpolymeren verbunden sind, die nicht in den genannten Schriften beschrieben sind.

### Beschreibung des Verfahrens:

Der Mehrschichtverbund wird gegebenenfalls zerkleinert und mit dem Trennmedium, enthaltend wenigstens ein ätherisches Öl, ausgewählt aus der Gruppe bestehend aus Phenolen, Phenylpropanoiden und Furanocumarinen, unter Rückfluss behandelt. Die Behandlung kann auch bei einem Druck > Normaldruck (1013mPas), beispielsweise in einem Autoklav, und damit höherer Siedetemperatur durchgeführt werden. Dem Fachmann ist die Abhängigkeit des Siedepunktes eines Stoffes vom Umgebungsdruck gut bekannt. Die in Abhängigkeit vom Druck bei der Behandlung einzustellenden Temperatur bestimmt der Fachmann daher auf Basis seines Fachwissens.

Bei der Behandlung wird die Klebstoffschicht bzw. Haftvermittlerschicht soweit geschwächt, dass durch geringfügige mechanische Belastung (beispielsweise Scherbeanspruchung) der Mehrschichtverbund in die einzelnen Schichten aufgetrennt werden kann.

Um die Effektivität des Verfahrens zu erhöhen, werden die Mehrschichtverbunde, beispielsweise mittels einer Schneidemühle oder eines Schredders, zerkleinert. Ein Mehrschichtverbund besitzt 2 von der oberen und unteren Schicht gebildete und von den übrigen Schichten des Mehrschichtverbundes wegweisende Oberflächen, die sogenannten Deckflächen, und mehrere Seitenflächen, entsprechend jeweils einem Schnitt durch die Schichten von der oberen zur unteren Deckfläche. Durch das Zerkleinern des Mehrschichtverbundes wird die durch die Seitenflächen in Summe gebildete Oberfläche und damit auch die Kontaktfläche des Trennmediums mit dem Klebstoffpolymer bzw. dem Haftvermittler vergrößert. Die Eindringwirkung des Trennmediums in die Klebstoff- bzw. Haftvermittlerschicht wird somit verbessert und die Schwächung der Klebstoff- bzw. Haftvermittlerschicht kann schneller erreicht werden.

Im Rahmen der vorliegenden Erfindung werden unter dem Begriff Mehrschichtpartikel alle aus dem Mehrschichtverbund durch mechanische Zerkleinerung, beispielsweise durch Schneiden, Schreddern, Zerreißen etc., erzeugten Teile verstanden.

Der Mehrschichtverbund wird so zerkleinert, dass die Ausdehnung der Mehrschichtpartikel entlang der Achsen, die parallel zu den Deckflächen der Mehrschichtpartikel verlaufen, im Mittel aller Mehrschichtpartikel, bevorzugt ≤ 400mm² und besonders bevorzugt ≤ 100mm² beträgt.

Im Rahmen der vorliegenden Erfindung werden unter dem Ausdruck Deckflächen eines Mehrschichtpartikels die beiden von den übrigen Schichten des Mehrschichtpartikels wegweisenden Oberflächen der oberen und unteren Schicht des Mehrschichtpartikels verstanden.

Die Schwächung der Klebstoffschicht, bzw. der Haftvermittlerschicht ist um so größer, je länger die Behandlung unter Rückfluss durchgeführt wird.

In Abhängigkeit von der Konzentration des/der ätherischen Öls/Öle in der wässrigen Emulsion und bei einer Mehrschichtpartikelgröße wie oben angegeben, sollte die Behandlung unter Rückfluss daher bevorzugt, bzw. besonders bevorzugt wie folgt dauern:
≥ 0,5 Volumen-% (bezogen auf das eingesetzte Volumen an Wasser): bevorzugt mehr als 2 Stunden, besonders bevorzugt wenigstens 3 Stunden, ganz besonders bevorzugt wenigstens 4 Stunden,
≥ 1 Volumen -% (bezogen auf das eingesetzte Volumen an Wasser): bevorzugt wenigstens 1,5 Stunden, besonders bevorzugt wenigstens 2 Stunden, ganz besonders bevorzugt wenigstens 3 Stunden,
≥ 10 Volumen -% (bezogen auf das eingesetzte Volumen an Wasser): bevorzugt wenigstens 0,5 Stunden, besonders bevorzugt wenigstens 1 Stunde, ganz besonders bevorzugt wenigstens 2 Stunden.

Vor oder nach dem Zerkleinern - und vor dem Einbringen der Mehrschichtpartikel in das Trennmedium - können die Mehrschichtverbunde bzw. die Mehrschichtpartikel durch einen Waschprozess von anhaftenden Lebensmitteln etc. befreit (gereinigt) werden. Hierfür können wässrige Lösungen von z.B. Tensiden, oberflächenaktiven Substanzen, Säuren oder Basen verwendet werden.

Das Trennmedium kann vor oder nach dem Einbringen der Mehrschichtpartikel in das Trennmedium auf die Siedetemperatur erwärmt werden. Die Geschwindigkeit der Auftrennung der Mehrschichtpartikel in die Einzelschichten kann durch Erzeugen einer laminaren oder turbulenten Bewegung/Strömung im Trennmedium beschleunigt werden.

Die Arbeitsweise ist in einem Batchprozess oder in einem kontinuierlichen Prozess möglich.

Nach der Behandlung mit dem Trennmedium werden die Partikel der Einzelschichten durch Sieben, durch Filtration oder durch Zentrifugieren von dem Trennmedium separiert. Noch aneinanderhaftende Schichten, d.h. Schichten, die nach der Behandlung mit dem Trennmedium noch nicht vollständig voneinander gelöst sind, können mechanisch, z.B. durch ein scherendes Walzenpaar, voneinander getrennt werden.

Die Trennung der Partikel in die sortenreinen Polymerklassen und in Aluminiumpartikel, d.h. die Auftrennung nach Partikelmaterialien, kann durch die bekannten Trennverfahren z.B. Flotation, Aufschwimm- oder Absetzverhalten, durch Wirbelstrom (Abtrennen von Aluminium) erfolgen.

Druckfarben können im Nachgang durch geeignete Waschprozesse von den Polymerpartikeln bzw. den Aluminiumpartikeln entfernt werden. Beispielhaft sei hier auf das Patent EP 2 832 459 A1 hingewiesen.

Anhaftendes ätherisches Öl kann entweder durch einen Waschprozess unter Mitverwendung geeigneter Tenside von dem Polymerpartikeln bzw. den Aluminiumpartikeln abgewaschen werden, oder durch eine Wasserdampfdestillation von den Polymerpartikeln bzw. den Aluminiumpartikeln entfernen werden.

Nach Trocknung der separierten, gereinigten und gegebenenfalls von den Druckfarben befreiten Polymerpartikel bzw. Aluminiumpartikel können diese wieder in den Wertstoffkreislauf zurückgeführt werden.

Der Volumenanteil ätherischen Öls in dem Trennmedium kann während der Behandlung der Mehrschichtverbunde im Batch-, oder in dem kontinuierlichen Prozess bestimmt werden. Falls nötig, kann durch Zusatz von ätherischem Öl der Volumenanteil im Trennmedium konstant gehalten oder aufgestockt werden.

Während der Behandlung der Mehrschichtverbunde mit dem Trennmedium wird Polyurethanpolymer in das Trennmedium übergehen. Dabei kann das Polyurethanpolymer sowohl in Form von ungelösten z.B. gequollenen Polymerpartikeln oder auch gelöst in das Trennmedium übergehen. Polyurethanpartikel können durch geeignete Methoden z.B. Filtration, Zentrifugieren aus dem Trennmedium abgetrennt werden.

### Beispiele

### Mehrschichtverbunde:

| | |
|---|---|
| Mehrschichtverbund 1: | Polyester/Druckfarbe//Aluminium//Polyethylen |
| | Verpackung Eduscho Espresso (Etikett: 29.06.2020 L9031 H57/2 08:56) |
| Mehrschichtverbund 2: | Polyester / Druckfarbe// Polyethylen |
| | Hundetrockenfutter "Minivita" von Josera |

Polyester und Druckfarbe werden zusammen als eine Schicht betrachtet.
// bedeutet Klebeschicht, basierend auf einem Polyurethankleber.

### Ätherische Öle:

Bezugsquelle für alle im Folgenden genannten Öle: Sigma-Aldrich, München)
Eugenol (CAS# 97-53-0) - Phenylpropanoid
Trans-Anethol (CAS# 104-46-1) (Phenylpropanoid)
Trans-Zimtsäuremethylester (CAS#: 1754-62-7) (Phenylpropaniod-Derivat)
Linalool (CAS# 78-70-6) -Monoterpen
Citronellal (CAS# 106-23-0) -Monoterpen

### Bestimmung der Verbundfestigkeit:

Die Verbundhaftung der Folienschichten wird mit der Zwick 5kN Allround table-top Prüfmaschine nach der DIN 55533-5 im 180°-Schälversuch bestimmt. Die angegebenen Werte sind die Mittelwerte aus fünf Einzelmessungen.

### Versuch 1: Visuelle Prüfung der Trennung (Tabelle 1)

Die Mehrschichtverbunde werden mit einer Schere in ca. 1cm ² große Quadrate geschnitten. 10 Stücke der ca. 1cm ² Mehrschichtverbunde werden in eine mit Ölbad beheizte 250ml Mehrhalskolbenrührapparatur mit Rührer, Thermometer und Rückflusskühler gegeben.

In die Rührapparatur werden 100ml Wasser bzw. 100ml Wasser mit 0,1ml, 0,5ml, 1ml, 10ml der ätherischen Öle gefüllt und auf Siedetemperatur erwärmt. Der Kolbeninhalt wird bis zu 20 Std. unter Rückfluss bei ca. 100°C gekocht. In 1-stündigen Abständen werden die Mehrschichtverbunde visuell auf Trennung geprüft.

### Mehrschichtverbund 1

**Tabelle 1**

| | 1 Std. | | 2 Std. | | 3 Std. | | 20 Std. | |
|---|---|---|---|---|---|---|---|---|
| | Alu//PE T | Alu//P E | Alu//PE T | Alu//P E | Alu//PE T | Alu//P E | Alu//PE T | Alu//P E |
| 100ml Wasser | - | - | - | - | - | - | - | - |
| +0,1 % Eugenol | - | - | - | - | - | - | - | - |
| + 0,5 % Eugenol | - | - | - | - | -+ | -+ | 0 | 0 |
| +1% Eugenol | -+ | -+ | + | + | ++ | ++ | 0 | 0 |
| +10% Eugenol | + | + | ++ | ++ | 0 | 0 | 0 | 0 |
| + 1% Trans-Anethol | 0 | 0 | 0 | 0 | - | ++ | 0 | 0 |
| + 1 % Trans-Zimtsäuremethylester | 0 | 0 | 0 | 0 | ++ | + | 0 | 0 |
| + 1% Linalool | 0 | 0 | 0 | 0 | - | -+ | 0 | 0 |
| 1% Citronellal | 0 | 0 | 0 | 0 | - | + | 0 | 0 |
| + 0,33% Eugenol | 0 | 0 | 0 | 0 | + | ++ | 0 | 0 |
| + 0,33% Trans-Anethol | | | | | | | | |
| + 0,33% Trans-Zimtsäuremethylester | | | | | | | | |
| + 1% Eugenol | 0 | 0 | 0 | 0 | ++ | ++ | 0 | 0 |
| + 1% Trans-Anethol | | | | | | | | |
| + 1% Trans-Zimtsäuremethylester | | | | | | | | |

| | | | | | | | | |
|---|---|---|---|---|---|---|---|---|
| - : keine Änderung der Verbundhaftung / keine Trennwirkung sichtbar -+ : an den Schnittkanten Trennung der Schichten + : Delamination bereits flächig sichtbar ++: vollständige Delamination 0 : nicht geprüft % = Volumenprozent | | | | | | | | |

Sowohl bei den Terpenen als auch bei den Phenylpropanoiden tritt eine trennende Wirkung ein, wobei die Wirkung der Phenylpropanoide die der Terpene noch übertrifft. Der Zusatz von 1% Eugenol führt bereits nach 3 Stunden zu einer vollständigen Auflösung des Verbundes. In reinem Wasser ergibt sich auch nach 20 Stunden keine Trennung der Verbunde.

### Versuch 2: Bestimmung der Abnahme der Verbundfestigkeit der Folienschichten (Tabelle 2)

15mm breite und 20cm lange Streifen der Mehrschichtverbunde werden aus den Verpackungen herausgeschnitten. Die Streifen wurden in 100ml Wasser, bzw. in 100ml Wasser in Mischung mit 1ml Eugenol bzw. Trans-Anethol über 3 Std. am Rückfluss (p ~ 1bar) in einem 250ml Mehrhalskolbenrührapparatur mit Rückflußkühler gekocht. Nach dem Kochen wurden die Streifen der Apparatur entnommen und innerhalb von 30 min. die Verbundhaftung gemessen. Die Verbundhaftung der Folienschichten wurde mit der Zwick 5kN Allround table-top Prüfmaschine nach der DIN 55533-5 im 180°-Schälversuch bestimmt. Die gelösten Enden an 15mm breite Streifen der Folienverbunde werden in die Befestigungsklammern der Zwick-Prümaschine eingespannt. Während der Messung werden die Prüfklammern mit der Geschwindigkeit 100mm/min. auseinandergezogen. Die angegebenen Werte sind die Mittelwerte aus fünf Einzelmessungen.

**Tabelle 2**

| nach 3 Std. | Verbund 1 | | Verbund 2 |
|---|---|---|---|
| | Alu//PET | Alu//PE | PET//PE |
| 100ml Wasser | 1,6 | F* | 2,2 |
| +1% Eugenol | 0,7 | 1,0 | 0,4 |
| + 1% Trans-Anethol | 0,4 | 0,6 | 0,5 |
| + 0,33% Eugenol | 0,4 | 0,2 | / |
| | | | |
| + 0,33% Trans-Anethol | | | |
| | | | |
| + 0,33% Trans-Zimtsäuremethylester | | | |
| + 1% Eugenol | <0,1 | 0,6 | / |
| | | | |
| + 1% Trans-Anethol | | | |
| | | | |
| + 1% Trans-Zimtsäuremethylester | | | |

| | | | |
|---|---|---|---|
| % = Volumenprozent *: Folienverbund konnte nicht getrennt werden. Es kommt bei dem Versuch unmittelbar zum Abriss einer Folie | | | |

Die Schwächung der Klebstoffschicht durch die Phenylpropanoide ist offensichtlich. Die Verbundfestigkeit der Mehrschichtverbunde liegt nach der Behandlung mit der wässrigen Mischung deutlich niedriger als der nur mit Wasser behandelte Mehrschichtverbund.

## Patentansprüche

1. Verwendung eines Trennmediums, enthaltend mindestens ein ätherisches Öl oder bestehend aus mindestens einem ätherischen Öl zur Trennung von mindestens zwei durch mindestens einen Polyurethan-basierten Haftvermittler und/oder mindestens ein Polyurethan-basiertes Klebstoffpolymer, flächig miteinander verbundenen Schichten eines Mehrschichtverbunds, wobei das ätherische Öl ausgewählt ist aus der Gruppe bestehend aus Phenylpropanoiden.

2. Verfahren zum Trennen von mindestens zwei durch mindestens einen Polyurethan-basierten Haftvermittler und/oder mindestens ein Polyurethan-basiertes Klebstoffpolymer, flächig miteinander verbundenen Schichten von Mehrschichtverbunden, **dadurch gekennzeichnet, dass** der Mehrschichtenverbund mit einem Trennmedium, enthaltend mindestens ein ätherisches Öl oder bestehend aus mindestens einem ätherischen Öl, behandelt wird, wobei das ätherische Öl ausgewählt ist aus der Gruppe bestehend aus Phenylpropanoiden.

3. Verwendung gemäß Anspruch 1 oder Verfahren gemäß Anspruch 2, **dadurch gekennzeichnet, dass** das Trennmedium mindestens ein ätherisches Öl, ausgewählt aus der Gruppe bestehend aus Phenylpropanoiden, enthält und
a) als eine einphasige Mischung des mindestens einen ätherischen Öls mit mindestens einer anderen Substanz,
oder
b) als mehrphasige Zusammensetzung des mindestens einen ätherischen Öls mit mindestens einer anderen Substanz, vorzugsweise als eine wässrige Emulsion des mindestens einen ätherischen Öls,
vorliegt.

4. Verwendung oder Verfahren gemäß Anspruch 3 b), **dadurch gekennzeichnet, dass** die wässrige Emulsion > 0,1 Volumen-%, besonders bevorzugt ≥ 0,5 Volumen-% des mindestens einen ätherischen Öls, bezogen auf das eingesetzte Volumen an Wasser, enthält.

5. Verwendung gemäß einem der Ansprüche 1, 3 oder 4 oder Verfahren gemäß einem der Ansprüche 2 bis 4, **dadurch gekennzeichnet, dass** dem Trennmedium oberflächenaktive Substanzen zugegeben werden.

6. Verwendung gemäß einem der Ansprüche 1 oder 3 bis 5 oder Verfahren gemäß einem der Ansprüche 2 bis 5, **dadurch gekennzeichnet, dass** die mindestens zwei flächig miteinander verbundenen Schichten des Mehrschichtverbunds mindestens ein Material enthalten, ausgewählt aus der Gruppe bestehend aus Polyethylen-, Polypropylen-, Polyester- oder Polyamid, Aluminium, Papier, Pappe und Mischungen davon, weiter bevorzugt aus mindestens einem der genannten Materialien besteht.

7. Verfahren gemäß einem der Ansprüche 2 bis 6, **dadurch gekennzeichnet, dass** der Mehrschichtenverbund in das Trennmedium eingebracht wird, das Trennmedium vor oder nach dem Einbringen des Mehrschichtenverbunds auf Siedetemperatur erwärmt wird und der Mehrschichtenverbund unter Rückfluss des Trennmediums bei Normaldruck (1013 mPas) oder einem Druck > 1013 mPas behandelt wird.

8. Verfahren gemäß einem der Ansprüche 2 bis 7, **dadurch gekennzeichnet, dass** das Verfahren im kontinuierlichen Betrieb oder im diskontinuierlichen Betrieb durchgeführt wird.

9. Verfahren gemäß einem der Ansprüche 2 bis 8, **dadurch gekennzeichnet, dass** der Mehrschichtenverbund vor dem Einbringen in das Trennmedium mechanisch zu Mehrschichtpartikeln zerkleinert wird.

10. Verfahren gemäß Anspruch 9, **dadurch gekennzeichnet, dass** die Ausdehnung der Mehrschichtpartikel entlang der Achsen, die parallel zu den Deckflächen der Mehrschichtpartikel verlaufen, im Mittel aller Mehrschichtpartikel, ≤ 400mm² und bevorzugt ≤ 100mm² beträgt, wobei unter dem Ausdruck Deckflächen eines Mehrschichtpartikels die beiden von den übrigen Schichten des Mehrschichtpartikels wegweisenden Oberflächen der oberen und unteren Schicht des Mehrschichtpartikels verstanden werden.

11. Verfahren gemäß einem der Ansprüche 8 bis 10, **dadurch gekennzeichnet, dass** nach der Behandlung mit dem Trennmedium noch aneinanderhaftende Schichten der Mehrschichtpartikel mechanisch voneinander getrennt werden.

12. Verfahren gemäß einem der Ansprüche 8 bis 10, **dadurch gekennzeichnet, dass** nach der Behandlung mit dem Trennmedium das Trennmedium von den getrennten Schichten der Mehrschichtpartikel abgetrennt wird.

13. Verfahren gemäß Anspruch 11, **dadurch gekennzeichnet, dass** nach der Behandlung mit dem Trennmedium und der mechanischen Trennung der noch aneinanderhaftenden Schichten der Mehrschichtpartikel das Trennmedium von den getrennten Schichten der Mehrschichtpartikel abgetrennt wird .

14. Verfahren gemäß Anspruch 12 oder 13, **dadurch gekennzeichnet, dass** eine Auftrennung der nach der Abtrennung des Trennmediums erhaltenen Mischung an Partikelschichten nach Partikelmaterialien erfolgt.

## Claims

1. Use of a separating medium comprising or consisting of at least one essential oil for separating at least two layers of a multilayer composite that are bonded to one another over their area by at least one polyurethane-based adhesion promoter and/or at least one polyurethane-based adhesive polymer, the essential oil being selected from the group consisting of phenylpropanoids.

2. Process for separating at least two layers of multilayer composites that are bonded to one another over their area by at least one polyurethane-based adhesion promoter and/or at least one polyurethane-based adhesive polymer, **characterized in that** the multilayer composite is treated with a separating medium comprising or consisting of at least one essential oil, the essential oil being selected from the group consisting of phenylpropanoids.

3. Use according to Claim 1 or process according to Claim 2, **characterized in that** the separating medium comprises at least one essential oil selected from the group consisting of phenylpropanoids and is present
a) in the form of a single-phase mixture of the at least one essential oil with at least one other substance,
or
b) in the form of a multiphase composition of the at least one essential oil with at least one other substance, preferably in the form of an aqueous emulsion of the at least one essential oil.

4. Use or process according to Claim 3 b), **characterized in that** the aqueous emulsion comprises > 0.1% by volume, particularly preferably ≥ 0.5% by volume, of the at least one essential oil, based on the volume of water used.

5. Use according to any of Claims 1, 3 or 4 or process according to any of Claims 2 to 4, **characterized in that** surface-active substances are added to the separating medium.

6. Use according to any of Claims 1 or 3 to 5 or process according to any of Claims 2 to 5, **characterized in that** the at least two layers of the multilayer composite that are bonded together over their area comprise at least one material selected from the group consisting of polyethylene, polypropylene, polyester or polyamide, aluminum, paper, cardboard, and mixtures thereof, more preferably consist of at least one of the materials mentioned.

7. Process according to any of Claims 2 to 6, **characterized in that** the multilayer composite is introduced into the separating medium, the separating medium is heated to boiling temperature before or after the introduction of the multilayer composite, and the multilayer composite is treated by refluxing the separating medium at standard pressure (1013 mPas) or at a pressure > 1013 mPas.

8. Process according to any of Claims 2 to 7, **characterized in that** the process is carried out in continuous operation or in discontinuous operation.

9. Process according to any of Claims 2 to 8, **characterized in that** the multilayer composite is mechanically comminuted into multilayer particles before being introduced into the separating medium.

10. Process according to Claim 9, **characterized in that** the multilayer particles extend along the axes that run parallel to the cover surfaces of the multilayer particles by an average, for all multilayer particles, of ≤ 400 mm² and preferably ≤ 100 mm², the expression "cover surfaces of a multilayer particle" being understood as meaning the surfaces of the top layer and bottom layer of the multilayer particle that both face away from the other layers of the multilayer particle.

11. Process according to any of Claims 8 to 10, **characterized in that**, after the treatment with the separating medium, layers of the multilayer particles that are still adhering to one another are mechanically separated from one another.

12. Process according to any of Claims 8 to 10, **characterized in that**, after the treatment with the separating medium, the separating medium is separated from the separated layers of the multilayer particles.

13. Process according to Claim 11, **characterized in that**, after the treatment with the separating medium and the mechanical separation of layers of the multilayer particles that are still adhering to one another, the separating medium is separated from the separated layers of the multilayer particles.

14. Process according to Claim 12 or 13, **characterized in that** the mixture of particle layers obtained after separation of the separating medium is separated according to particle material.

## Revendications

1. Utilisation d'un agent de séparation, contenant au moins une huile essentielle ou constitué par au moins une huile essentielle pour la séparation d'au moins deux couches d'un composite multicouche, reliées à plat l'une à l'autre par au moins un promoteur d'adhérence à base de polyuréthane et/ou au moins un polymère adhésif à base de polyuréthane,
l'huile essentielle étant choisie dans le groupe constitué par les phénylpropanoïdes.

2. Procédé pour la séparation d'au moins deux couches de composites multicouches, reliées à plat l'une à l'autre par au moins un promoteur d'adhérence à base de polyuréthane et/ou au moins un polymère adhésif à base de polyuréthane, **caractérisé en ce que** le composite multicouche est traité par un agent de séparation, contenant au moins une huile essentielle ou constitué par au moins une huile essentielle,
l'huile essentielle étant choisie dans le groupe constitué par les phénylpropanoïdes.

3. Utilisation selon la revendication 1 ou procédé selon la revendication 2, caractérisé(e) en ce que l'agent de séparation contient au moins une huile essentielle choisie dans le groupe constitué par les phénylpropanoïdes et
a) se trouve sous forme d'un mélange à une phase de ladite au moins une huile essentielle avec au moins une autre substance ou
b) se trouve sous forme d'une composition à plusieurs phases de ladite au moins une huile essentielle avec au moins une autre substance, de préférence sous forme d'une émulsion aqueuse de ladite au moins une huile essentielle.

4. Utilisation ou procédé selon la revendication 3 b), caractérisé (e) en ce que l'émulsion aqueuse contient > 0,1% en volume, de manière particulièrement préférée ≥ 0,5% en volume, de ladite au moins une huile essentielle, par rapport au volume d'eau utilisé.

5. Utilisation selon l'une des revendications 1, 3 ou 4 ou procédé selon l'une des revendications 2 à 4, caractérisé(e) en ce que l'agent de séparation est additionné de substances tensioactives.

6. Utilisation selon l'une des revendications 1, 3 à 5 ou procédé selon l'une des revendications 2 à 5, caractérisé(e) en ce que lesdites au moins deux couches du composite multicouche, reliées à plat l'une à l'autre, contiennent au moins un matériau, choisi dans le groupe constitué par le polyéthylène, le polypropylène, le polyester ou le polyamide, l'aluminium, le papier, le carton et leurs mélanges, plus préférablement sont constituées par au moins l'un des matériaux mentionnés.

7. Procédé selon l'une des revendications 2 à 6, **caractérisé en ce que** le composite multicouche est introduit dans l'agent de séparation, l'agent de séparation est chauffé à la température d'ébullition avant ou après l'introduction du composite multicouche et le composite multicouche est traité sous reflux de l'agent de séparation à pression normale (1013 mPa.s) ou à une pression > 1013 mPa.s.

8. Procédé selon l'une des revendications 2 à 7, **caractérisé en ce que** le procédé est réalisé dans un fonctionnement continu ou discontinu.

9. Procédé selon l'une des revendications 2 à 8, **caractérisé en ce que** le composite multicouche est déchiqueté mécaniquement en particules multicouches avant l'introduction dans l'agent de séparation.

10. Procédé selon la revendication 9, **caractérisé en ce que** l'extension des particules multicouches le long des axes qui s'étendent parallèlement aux surfaces de recouvrement des particules multicouches est, en moyenne de toutes les particules multicouches, ≤ 400 mm² et de préférence ≤ 100 mm², l'expression surfaces de recouvrement d'une particule multicouche signifiant les deux surfaces opposées aux autres couches de la particule multicouche de la couche supérieure et de la couche inférieure de la particule multicouche.

11. Procédé selon l'une des revendications 8 à 10, **caractérisé en ce qu'**après le traitement par l'agent de séparation, des couches adhérant encore les unes aux autres des particules multicouches sont séparées mécaniquement les unes des autres.

12. Procédé selon l'une des revendications 8 à 10, **caractérisé en ce qu'**après le traitement par l'agent de séparation, l'agent de séparation est séparé des couches séparées des particules multicouches.

13. Procédé selon la revendication 11, **caractérisé en ce qu'**après le traitement par l'agent de séparation et après la séparation mécanique des couches adhérant encore les unes aux autres des particules multicouches, l'agent de séparation est séparé des couches séparées des particules multicouches.

14. Procédé selon la revendication 12 ou 13, **caractérisé en ce qu'**une séparation du mélange de couches des particules, obtenu après la séparation de l'agent de séparation, en fonction des matériaux de particule est effectuée.
